(19) Europäisches Patentamt
European Patent Office
Office européen des brevets

(11) EP 4 142 005 B1

(12) **EUROPEAN PATENT SPECIFICATION**

(45) Date of publication and mention of the grant of the patent:
**15.10.2025 Bulletin 2025/42**

(21) Application number: **22190775.1**

(22) Date of filing: **17.08.2022**

(51) International Patent Classification (IPC):
***H01M 10/0567** (2010.01)* ***H01M 10/0525** (2010.01)*
***H01M 10/42** (2006.01)* ***H01M 4/36** (2006.01)*
***H01M 4/38** (2006.01)* ***H01M 4/525** (2010.01)*
***H01M 4/587** (2010.01)* ***H01M 4/62** (2006.01)*

(52) Cooperative Patent Classification (CPC):
**H01M 10/0567; H01M 4/364; H01M 4/366; H01M 4/386; H01M 4/525; H01M 4/587; H01M 4/625; H01M 10/0525; H01M 10/4235;**
H01M 2300/0025; Y02E 60/10

(54) **RECHARGEABLE LITHIUM BATTERY**
WIEDERAUFLADBARE LITHIUMBATTERIE
BATTERIE RECHARGEABLE AU LITHIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2021 KR 20210113346**

(43) Date of publication of application:
**01.03.2023 Bulletin 2023/09**

(73) Proprietor: **Samsung SDI Co., Ltd.**
**Yongin-si, Gyeonggi-do 17084 (KR)**

(72) Inventors:
- **KIM, Myunghoon**
  **Yongin-si, Gyeonggi-do 17084 (KR)**
- **CHOI, Hyunbong**
  **Yongin-si, Gyeonggi-do 17084 (KR)**
- **KIM, Sanghoon**
  **Yongin-si, Gyeonggi-do 17084 (KR)**
- **KIM, Yunhee**
  **Yongin-si, Gyeonggi-do 17084 (KR)**
- **PARK, Injun**
  **Yongin-si, Gyeonggi-do 17084 (KR)**
- **PARK, Hongryeol**
  **Yongin-si, Gyeonggi-do 17084 (KR)**
- **OH, Seungryong**
  **Yongin-si, Gyeonggi-do 17084 (KR)**
- **JEONG, Myunghwan**
  **Yongin-si, Gyeonggi-do 17084 (KR)**

(74) Representative: **Gulde & Partner**
**Patent- und Rechtsanwaltskanzlei mbB**
**Berliner Freiheit 2**
**10785 Berlin (DE)**

(56) References cited:
**EP-A1- 2 746 288** **EP-A1- 4 009 410**
**WO-A1-2022/158701** **WO-A1-2022/158728**
**CN-A- 108 365 265** **CN-A- 108 428 942**
**KR-A- 20190 123 136** **US-A1- 2020 185 773**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 142 005 B1

## Description

## BACKGROUND OF THE INVENTION

### (a) Field of the Invention

The present disclosure relates to a rechargeable lithium battery.

### (b) Description of the Related Art

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

In particular, as IT devices increasingly achieve high performance, a high-capacity battery is required, but the high capacity may be realized through expansion of a voltage range, increasing energy density but bringing about a problem of deteriorating performance of a positive electrode due to oxidization of an electrolyte solution in the high voltage range.

For example, $LiPF_6$, which is most often used as a lithium salt of an electrolyte, reacts with an electrolyte solvent to promote depletion of the solvent and generate a large amount of gas. $LiPF_6$ is decomposed and produces a decomposition product such as HF, $PF_5$, and the like, which causes the electrolyte depletion and leads to performance deterioration and insufficient safety at a high temperature.

The decomposition products of the electrolyte solution are deposited into a film on the surface of an electrode to increase internal resistance of the battery and eventually cause problems of deteriorating battery performance and shortening a cycle-life. In particular, this side reaction is further accelerated at a high temperature where a reaction rate becomes faster, and gas components generated due to the side reaction may rapidly increase an internal pressure of the battery and thus have a fatal adverse effect on stability of the battery.

An oxidization of an electrolyte solution in the high voltage range is very accelerated and thus known to greatly increase resistance of the electrode during the long-term charge and discharge process.

For example, EP 4 009 410 A1 discloses a rechargeable lithium battery, comprising a positive electrode including a positive active material; a negative electrode including a negative active material and an additive which includes a cyclic phosphorus compound. US 2020/185773 A1 describes an electrolyte for a secondary battery including a lithium salt, a nonaqueous organic solvent and a cyclic fluorophosphonate compound which is able to improve stability and durability of an SEI film of an anode. KR 2019 0123136 A discloses a rechargeable lithium battery comprising a positive electrode including a positive active material; a negative electrode including a negative active material and an electrolyte solution including a non-aqueous organic solvent, a lithium salt and a cyclic halogenophosphite compound as an additive. CN 108 428 942 A relates to a lithium-ion battery including non-aqueous organic solvents, lithium salts and additives which are six-membered cyclic phosphite compounds and CN 108 365 265 A describes non-aqueous electrolyte compositions for a lithium-ion battery wherein the non-aqueous electrolyte comprises a non-aqueous organic solvent, conductive lithium salt and a cyclic phosphate or cyclic phosphite additive. EP 2 746 288 A1 discloses a rechargeable lithium battery, comprising a positive electrode including a positive active material, a negative electrode including a negative active material, and an electrolyte comprising: a lithium salt, a non-aqueous organic solvent and an electrolyte additive.

Accordingly, an electrolyte solution applicable under conditions of a high voltage and a high temperature condition is being required.

## SUMMARY OF THE INVENTION

The present invention provides a rechargeable lithium battery with improved battery stability by suppressing decomposition of an electrolyte solution and a side reaction with an electrode and simultaneously, with improved initial resistance and high-temperature storage characteristics by improving impregnation of a positive electrode in the electrolyte solution.

In the present invention, a rechargeable lithium battery includes a positive electrode including a positive active material; a negative electrode including a negative active material; and an electrolyte solution including a non-aqueous organic solvent, a lithium salt, and an additive,

wherein the additive includes a compound represented by Chemical Formula 1 and succinonitrile (SN), and
the positive active material includes at least one of lithium composite oxides represented by Chemical Formula 3.

[Chemical Formula 1]

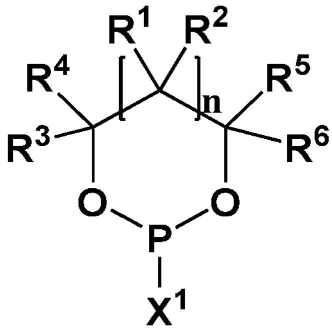

In Chemical Formula 1,

$X^1$ is a fluoro group, a chloro group, a bromo group, or an iodo group,
$R^1$ to $R^6$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
n is an integer of 0 or 1;

[Chemical Formula 3] $Li_aNi_xCo_yM^1_zM^2_tO_2$

wherein, in Chemical Formula 3,

$0.9 \leq a < 1.2$, $0.88 \leq x < 1.0$, $0 \leq y \leq 0.2$, $0 < z \leq 0.3$, $x + y + z = 1$, $0 \leq t \leq 0.1$,

$M^1$ is Mn, Al, or a combination thereof, and
$M^2$ is Ti, Mg, Zr, Ca, Nb, Fe, P, F, B, or a combination thereof,
wherein the term "substituted" refers to replacement of hydrogen of a compound by a substituent selected from a halogen atom (F, Br, Cl, or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, and a combination thereof.

Chemical Formula 1 may include a compound represented by Chemical Formula 1A or Chemical Formula 1B.

[Chemical Formula 1A] [Chemical Formula 1B]

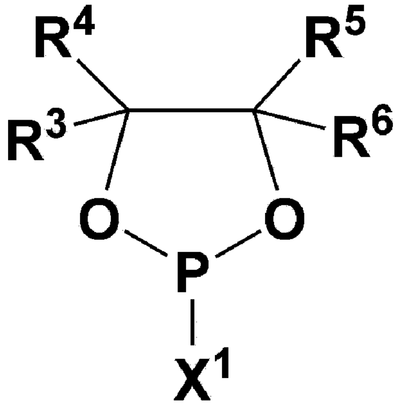 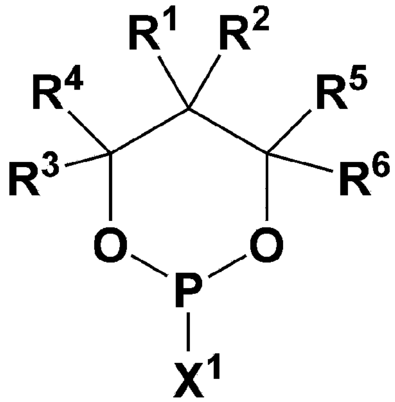

In Chemical Formula 1A and Chemical Formula 1B,

$X^1$ is a fluoro group, a chloro group, a bromo group, or an iodo group, and
$R^1$ to $R^6$ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

In Chemical Formula 1A and Chemical Formula 1B, $R^3$ and $R^4$ may each be hydrogen, and at least one of $R^1$, $R^2$, $R^5$, and $R^6$ may be a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.
In Chemical Formula 1A, $R^3$ and $R^4$ may each be hydrogen and at least one of $R^5$ and $R^6$ may be a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.
The compound represented by Chemical Formula 1 may be included in an amount of about 0.1 parts by weight to about 5.0 parts by weight based on 100 parts by weight of the electrolyte solution.
The compound represented by Chemical Formula 1 may be included in an amount of about 0.1 parts by weight to about 3.0 parts by weight based on 100 parts by weight of the electrolyte solution.
The compound represented by Chemical Formula 1 may be at least one of the compounds of Group 1.

[Group 1]

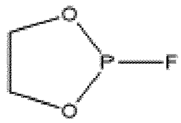 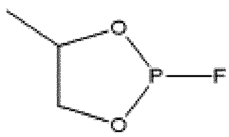

The additive may further include at least one of other additives selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), 1,3,6-hexane tricyanide (HTCN), propene sultone (PST), propane sultone (PS), lithium tetrafluoroborate ($LiBF_4$), lithium difluorophosphate ($LiPO_2F_2$), and 2-fluoro biphenyl (2-FBP).
In Chemical Formula 3, x may be in the range of $0.88 \leq x \leq 0.94$.
An embodiment provides a rechargeable lithium battery having improved battery stability by suppressing a decomposition of the electrolyte solution and side reaction with the electrode, thereby reducing gas generation and suppressing increase in internal resistance of the battery at the same time.

## BRIEF DESCRIPTION OF THE DRAWINGS

FIG. 1 is a schematic view illustrating a rechargeable lithium battery according to an embodiment.

## DETAILED DESCRIPTION OF THE EMBODIMENTS

Hereinafter, a rechargeable lithium battery according to an embodiment of the present invention will be described in detail with reference to the accompanying drawings. However, these embodiments are exemplary, the present invention is not limited thereto and the present invention is defined by the scope of claims.

Hereinafter, when a definition is not otherwise provided, "substituted" refers to replacement of hydrogen of a compound by a substituent selected from a halogen atom (F, Br, Cl, or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, and a combination thereof.

A rechargeable lithium battery may be classified as lithium ion batteries, lithium ion polymer batteries, and lithium polymer batteries according to the presence of a separator and the type of electrolyte solution used therein. rechargeable lithium battery may have a variety of shapes and sizes, and include cylindrical, prismatic, coin, or pouch-type batteries, and may be thin film batteries or may be rather bulky in size. Structures and manufacturing methods for these batteries pertaining to this disclosure are well known in the art.

Here, a cylindrical rechargeable lithium battery will be exemplarily described as an example of the rechargeable lithium battery. FIG. 1 schematically shows the structure of a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte solution (not shown) impregnating the positive electrode 114, the negative electrode 112, and the separator 113, a battery case 120 housing the battery cell, and a sealing member 140 sealing the battery case 120.

Hereinafter, a more detailed configuration of the rechargeable lithium battery 100 according to an embodiment will be described.

A rechargeable lithium battery according to an embodiment includes a positive electrode, a negative electrode, and an electrolyte solution.

The electrolyte solution includes a non-aqueous organic solvent, a lithium salt, and an additive, and the additive includes a compound represented by Chemical Formula 1 and succinonitrile (SN).

[Chemical Formula 1]

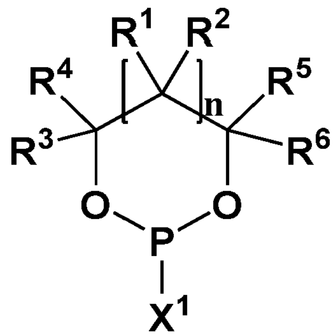

In Chemical Formula 1,

$X^1$ is a fluoro group, a chloro group, a bromo group, or an iodo group,
$R^1$ to $R^6$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
n is an integer of 0 or 1.

According to an embodiment, in Chemical Formula 1 $X^1$ is F.

The compound represented by Chemical Formula 1 forms a solid electrolyte interface (SEI) film having high high-temperature stability and excellent ion conductivity on the surface of the negative electrode, and suppresses a side

reaction of $LiPF_6$ due to the $-PO_2X^1$ (especially $-PO_2F$) functional group and thus reduce gas generation due to a decomposition reaction of the electrolyte when stored at a high temperature.

Specifically, the compound represented by Chemical Formula 1 may be coordinated with a pyrolyzed product of a lithium salt such as $LiPF_6$ or anions dissociated from the lithium salt and thus form a complex, and the complex formation may stabilize the pyrolyzed product of a lithium salt such as $LiPF_6$ or the anions dissociated from the lithium salt to suppress undesired side reaction of the anions with the electrolyte solution. Accordingly, the cycle-life characteristics of the rechargeable lithium battery may be improved, and gas may be prevented from being generated inside the rechargeable lithium battery, thereby remarkably reducing a failure rate.

Chemical Formula 1 may be represented by Chemical Formula 1A or Chemical Formula 1B.

[Chemical Formula 1A] [Chemical Formula 1B]

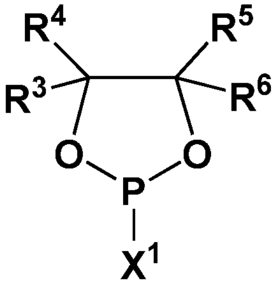

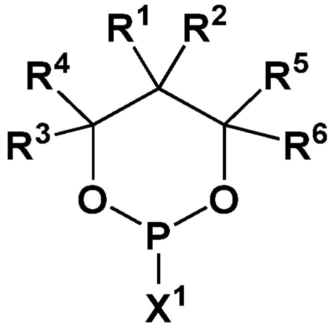

In Chemical Formula 1A and Chemical Formula 1B,

$X^1$ is a fluoro group, a chloro group, a bromo group, or an iodo group, and
$R^1$ to $R^6$ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

In Chemical Formula 1A and Chemical Formula 1B, $R^3$ and $R^4$ may each be hydrogen, and at least one of $R^1$, $R^2$, $R^5$, and $R^6$ may be a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

For example, Chemical Formula 1 may be represented by Chemical Formula 1A.

In a more specific example, in Chemical Formula 1A, $R^3$ and $R^4$ may each be hydrogen, and at least one of $R^5$ and $R^6$ may be a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

For example, in Chemical Formula 1A, $R^3$ and $R^4$ may each be hydrogen, and at least one of $R^5$ and $R^6$ may be a substituted or unsubstituted C1 to C10 alkyl group.

According to an embodiment, in Chemical Formula 1A or Chemical Formula 1B $X^1$ is F.

The compound represented by Chemical Formula 1 may be included in an amount of about 0.1 parts by weight to about 5.0 parts by weight, for example about 0.1 parts by weight to about 3.0 parts by weight, or about 0.1 parts by weight to about 2.0 parts by weight based on 100 parts by weight of the non-aqueous organic solvent and the lithium salt of the electrolyte solution (i.e. the combined weight of the non-aqueous organic solvent and the lithium salt without any other additive).

When the amount of the compound represented by Chemical Formula 1 is within the above range, a rechargeable lithium battery having improved high-temperature storage characteristics and cycle-life characteristics may be implemented.

For example, the compound represented by Chemical Formula 1 may be one of the compounds of Group 1, i.e. at least one of 2-fluoro-1,3,2-dioxaphospholane and 2-fluoro-4-methyl-1,3,2-dioxaphospholane.

[Group 1]

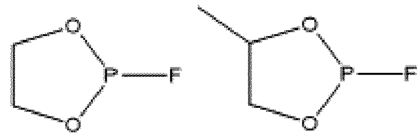

Meanwhile, the electrolyte may further include other additives in addition to the aforementioned compound.

**The** other additives may include at least one of vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), 1,3,6-hexane tricyanide (HTCN), propene sultone (PST), propane sultone (PS), lithium tetrafluoroborate ($LiBF_4$), lithium difluorophosphate ($LiPO_2F_2$), and 2-fluoro biphenyl (2-FBP).

By further including the aforementioned other additives, cycle-life may be further improved or gases generated from the positive electrode and the negative electrode may be effectively controlled during high-temperature storage.

The other additives may be included in an amount of about 0.2 parts by weight to about 20 parts by weight, specifically about 0.2 parts by weight to about 15 parts by weight, for example, about 0.2 parts by weight to about 10 parts by weight, based on 100 parts by weight of the non-aqueous organic solvent and the lithium salt of the electrolyte solution for the rechargeable lithium battery (i.e. the combined weight of the non-aqueous organic solvent and the lithium salt without any other additive).

When the content of other additives is as described above, the increase in film resistance may be minimized, thereby contributing to the improvement of battery performance.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and butylene carbonate (BC). **The** ester-based solvent may include methyl acetate, ethyl acetate, n-propyl acetate, t-butyl acetate, methyl propionate, ethyl propionate, propyl propionate, decanolide, mevalonolactone, and caprolactone. **The** ether-based solvent may include dibutyl ether, tetraglyme, diglyme, dimethoxyethane, 2-methyltetrahydrofuran, and tetrahydrofuran. **In** addition, ketone-based solvent may include cyclohexanone. **The** alcohol-based solvent may include ethanol and isopropyl alcohol, and the aprotic solvent may include nitriles such as R-CN (wherein R is a hydrocarbon group having a C2 to C20 linear, branched, or cyclic structure and may include a double bond, an aromatic ring, or an ether bond), amides such as dimethyl formamide, dioxolanes such as 1,3-dioxolane and, sulfolanes.

The non-aqueous organic solvent may be used at alone or in a mixture. When the organic solvent is used in a mixture, the mixture ratio may be controlled in accordance with a desirable battery performance.

The carbonate-based solvent is prepared by mixing a cyclic carbonate and a linear carbonate. When the cyclic carbonate and linear carbonate are mixed together in a volume ratio of about 5:5 to about 1:9, a performance of the electrolyte solution may be improved.

In particular, in an embodiment, the non-aqueous organic solvent may include the cyclic carbonate and the linear carbonate in a volume ratio of about 5:5 to about 2:8, and as a specific example, the cyclic carbonate and the linear carbonate may be included in a volume ratio of about 4:6 to about 2:8.

As a more specific example, the cyclic carbonate and the linear carbonate may be included in a volume ratio of about 3:7 to about 2:8.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of about 1:1 to about 30:1.

The aromatic hydrocarbon-based organic solvent may be an aromatic hydrocarbon-based compound of Chemical Formula 2.

[Chemical Formula 2]

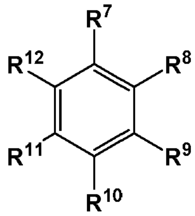

In Chemical Formula 2, $R^7$ to $R^{12}$ are the same or different and are hydrogen, a halogen, a C1 to C10 alkyl group, a haloalkyl group, or a combination thereof.

Specific examples of the aromatic hydrocarbon-based organic solvent are benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The lithium salt dissolved in the non-organic solvent supplies lithium ions in a battery, enables a basic operation of a rechargeable lithium battery, and improves transportation of the lithium ions between positive and negative electrodes. Examples of the lithium salt include at least one supporting salt selected from $LiPF_6$, $LiBF_4$, lithium difluoro(oxalate)borate (LiDFOB), $LiPO_2F_2$, $LiSbF_6$, $LiAsF_6$, $LiN(SO_2C_2F_5)_2$, $Li(CF_3SO_2)_2N$, $LiN(SO_2C_2F_5)_2$, $Li(FSO_2)_2N$ (lithium bis(fluorosulfonyl)imide, LiFSI), $LiC_4F_9SO_3$, $LiClO_4$, $LiAlO_2$, $LiAlCl_4$, $LiN(C_xF_{2x+1}SO_2)(C_yF_{2y+1}SO_2)$, wherein, x and y are natural numbers, for example, an integer ranging from 1 to 20, LiCl, LiI, and $LiB(C_2O_4)_2$ (lithium bis(oxalato) borate, LiBOB). The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The positive electrode includes a positive electrode current collector and a positive active material layer formed on the positive electrode current collector, and the positive active material layer includes a positive active material.

The positive active material includes at least one type of lithium composite oxide represented by Chemical Formula 3.

[Chemical Formula 3] $Li_aNi_xCo_yM^1_zM^2_tO_2$

In Chemical Formula 3,

$0.9 \leq a < 1.2$, $0.88 \leq x < 1.0$, $0 \leq y \leq 0.2$, $0 < z \leq 0.3$, $x + y + z = 1$, $0 \leq t \leq 0.1$,

$M^1$ is Mn, Al, or a combination thereof, and
$M^2$ is Ti, Mg, Zr, Ca, Nb, Fe, P, F, B, or a combination thereof.

The lithium composite oxide may have a coating layer on the surface, or the lithium composite oxide may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating process may include any conventional processes as long as it does not cause any side effects on the properties of the positive active material (e.g., ink jet coating, dipping), which is well known to persons having ordinary skill in this art, so a detailed description thereof is omitted.

**In Chemical** Formula 3, x may be in the range of $0.88 \leq x \leq 0.94$.

In a more specific embodiment, x in Chemical Formula 3 may be 0.88, 0.91, or 0.94.

According to an embodiment, $M^2$ is Al and t is zero.

The content of the positive active material may be about 90 wt% to about 98 wt% based on the total weight of the positive active material layer.

In an embodiment, the positive active material layer may include a binder. The content of the binder may be about 1 wt% to about 5 wt% based on the total weight of the positive active material layer.

The binder improves binding properties of positive active material particles with one another and with a current collector. Examples thereof are polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, and nylon.

The positive electrode current collector may be made of or include Al.

The negative electrode includes a negative electrode current collector and a negative active material layer including a negative active material formed on the negative electrode current collector.

The negative active material includes a material that reversibly intercalates/deintercalates lithium ions, a lithium metal, a lithium metal alloy, a material being capable of doping/dedoping lithium, or transition metal oxide.

The material that reversibly intercalates/deintercalates lithium ions includes carbon materials. The carbon material may be any generally-used carbon-based negative active material in a rechargeable lithium ion battery. Examples of the carbon material include crystalline carbon, amorphous carbon, and a combination thereof. The crystalline carbon may be non-shaped, or sheet, flake, spherical, or fiber shaped natural graphite or artificial graphite. The amorphous carbon may be a soft carbon, a hard carbon, a mesophase pitch carbonized product, calcined coke, and the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping and dedoping lithium may include Si, $SiO_x$ ($0 < x < 2$), a Si-Q alloy (wherein Q is selected from an alkali metal, an alkaline-earth metal, a Group 13 element, a Group 14 element, a Group 15 element, a Group 16 element, a transition metal, a rare earth element, and a combination thereof, and not Si), Sn, $SnO_2$, a Sn-R alloy (wherein R is an alkali metal, an alkaline-earth metal, a Group 13 element, a Group 14 element, a Group 15 element, a Group 16 element, a transition metal, a rare earth element, or a combination thereof, and not Sn), and the like. At least one of them may be mixed with $SiO_2$. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combination thereof.

The transition metal oxide may be a vanadium oxide, a lithium vanadium oxide, and the like.

The negative active material according to an embodiment may include at least one of graphite and a Si composite.

When the negative active material includes the Si composite and graphite together, the Si composite and graphite may be included in the form of a mixture, and the Si composite and graphite may be included in a weight ratio of about 1:99 to about 50:50. More specifically, the Si composite and graphite may be included in a weight ratio of about 3: 97 to about 20: 80 or about 5: 95 to about 20: 80.

The Si composite may include a core including Si-based particles and an amorphous carbon coating layer. For example, the core including Si-based particles may include at least one of Si particles, a Si-C composite, SiOx ($0 < x \leq 2$), and a Si alloy. For example, the center region of the core may include pores.

For example, a radius of the center region of the core corresponds to 30% to 50% of a radius of the negative active material , and the average particle diameter of the Si-based particles is 10 nm to 200 nm.

When the average particle diameter of the Si-based particles is within the above ranges, volume expansion occurring during charging and discharging may be suppressed, and interruption of a conductive path due to particle crushing during charging and discharging may be prevented.

For example, the center region does not include an amorphous carbon, an amorphous carbon exists only in the surface region of the negative electrode active material.

The negative electrode active material may further include crystalline carbon.

The crystalline carbon may include, for example, graphite, and more specifically, natural graphite, artificial graphite, or a mixture thereof.

In the present specification, an average particle diameter may be a particle size (D50) at a volume ratio of 50% in a cumulative size-distribution curve. In other words, a mean particle size result of polydisperse samples is determined by peak analysis of the particle size distribution graph. The median D50 is the value separating the higher half of the data from the lower half. It is the determined particle size from which half of the particles are smaller and half are larger.

The average particle diameter (D50) of the particles may be measured by laser diffraction (LD). The method may be performed according to ISO 13320-1. According to the IUPAC definition, the equivalent diameter of a non-spherical particle is equal to a diameter of a spherical particle that exhibits identical properties to that of the investigated non-spherical particle.

The amorphous carbon may include soft carbon, hard carbon, a mesophase pitch carbonized product, calcined coke, or a mixture thereof.

The amorphous carbon may be included in an amount of about 1 part by weight to 50 parts by weight, for example,

about 5 parts by weight to about 50 parts by weight, or about 10 parts by weight to about 50 parts by weight based on 100 parts by weight of the negative electrode active material.

In the negative active material layer, the negative active material may be included in an amount of about 95 wt% to about 99 wt% based on the total weight of the negative active material layer.

In an embodiment, the negative active material layer may include a binder, and optionally a conductive material. The content of the binder in the negative active material layer may be about 1 wt% to about 5 wt% based on the total weight of the negative active material layer. In the case of a conductive material is further included in the negative active material layer, the amount of the negative active material may be about 90 wt% to about 98 wt%, the amount of the binder may be about 1 wt% to about 5 wt%, and the amount of the conductive material may be about 1 wt% to about 5 wt% based on the total weight of the negative active material layer.

The binder improves binding properties of negative active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropyleneco polymer, polyethylene oxide, polyvinylpyrrolidone, polyepichlorohydrine, polyphosphazene, polyacrylonitrile, polystyrene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the water-soluble binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of about 0.1 to about 3 parts by weight based on 100 parts by weight of the negative active material.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, and a carbon fiber; a metal-based material including a metal powder or a metal fiber of copper, nickel, aluminum, and silver; a conductive polymer such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

The rechargeable lithium battery may further include a separator between the negative electrode and the positive electrode, depending on a type of the battery. Such a separator may for example include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

Hereinafter, examples of the present invention and comparative examples are described. These examples, however, are not in any sense to be interpreted as limiting the scope of the invention.

## Manufacture of Rechargeable Lithium Battery Cell

### Example 1

$LiNi_{0.88}Co_{0.105}Al_{0.015}O_2$ as a positive active material, polyvinylidene fluoride as a binder, and acetylene black as a conductive material were mixed in a weight ratio of 96:3:1 and then, dispersed in N-methyl pyrrolidone for preparing a positive active material slurry.

The positive active material slurry was coated on a 15 μm-thick Al foil and then, dried at 100 °C and pressed, manufacturing a positive electrode.

A negative active material is prepared by first mixing artificial graphite and an Si-C composite in a weight ratio of 93:7 to obtain a first mixture., The first mixture is then mixed with a styrene-butadiene rubber binder and carboxylmethyl cellulose in a weight ratio of 98:1:1 to obtain a second mixture. The second mixture is then, dispersed in distilled water, preparing a negative active material slurry.

The Si-C composite included a core including artificial graphite and silicon particles and a coal-based pitch is coated on the surface of the core.

The negative active material slurry was coated on a 10μm-thick Cu foil and then, dried at 100 °C and pressed for

manufacturing a negative electrode.

The positive electrode and the negative electrode were assembled with a 10μm-thick polyethylene separator to manufacture an electrode assembly, and an electrolyte solution was implanted thereinto, manufacturing a rechargeable lithium battery cell.

The electrolyte solution had a composition as follows.

(Composition of electrolyte solution)

Salt: $LiPF_6$ 1.5 M
Solvent: ethylene carbonate: ethylmethyl carbonate: dimethyl carbonate (EC:EMC:DMC = 20:10:70 in a volume ratio)
Additives: 0.5 parts by weight of 2-fluoro-4-methyl-1,3,2-dioxaphospholane, 10 parts by weight of fluoroethylene carbonate (FEC: fluoroethylene carbonate), and 0.5 parts by weight of succinonitrile (SN: succinonitrile)
Herein, in the electrolyte solution composition, "parts by weight" means a relative weight of each additive based on 100 parts by weight of the entire electrolyte solution (the lithium salt + the non-aqueous organic solvent).

**Examples 2 and 3**

Each rechargeable lithium battery cell was manufactured in substantially the same manner as Example 1 except that the electrolyte solution was prepared by changing the contents of 2-fluoro-4-methyl-1,3,2-dioxaphospholane into 1.0 parts by weight and 3.0 parts by weight, respectively.

**Examples 4 to 6**

Each rechargeable lithium battery cell was manufactured in substantially the same manner as a respective one selected from Examples 1 to 3 except that the positive electrode was manufactured by using $LiNi_{0.91}Co_{0.075}Al_{0.015}O_2$ as the positive active material.

**Examples 7 to 9**

Each rechargeable lithium battery cell was manufactured in substantially the same manner as a respective one selected from Examples 1 to 3 except that the positive electrode was manufactured by using $LiNi_{0.24}Co_{0.045}Al_{0.015}O_2$ as the positive active material.

**Comparative Examples 1 to 3**

Each rechargeable lithium battery cell was manufactured respectively in substantially the same manner as a respective one selected from Examples 1, 4, and 7 except that an electrolyte solution was prepared without adding the 2-fluoro-4-methyl-1,3,2-dioxaphospholane, respectively.

**Comparative Examples 4 to 7**

Each rechargeable lithium battery cell was manufactured respectively in substantially the same manner as a respective one selected from Comparative Example 1 and Examples 1 to 3 except that each positive electrode was manufactured by using $LiNi_{0.6}Co_{0.2}Al_{0.2}O_2$ as the positive active material.

**Comparative Examples 8 to 11**

Each rechargeable lithium battery cell was manufactured respectively in substantially the same manner as a respective one selected from Comparative Example 1 and Examples 1 to 3 except that each positive electrode was manufactured by using $LiNi_{0.5}Co_{0.2}Al_{0.3}O_2$ as the positive active material.

**Comparative Examples 12 to 15**

Each rechargeable lithium battery cell was manufactured respectively in the same manner as Comparative Example 1 and Examples 1 to 3 except that each positive electrode was manufactured by using $LiNi_{0.33}Co_{0.33}Al_{0.33}O_2$ as the positive active material.

**Evaluation 1: Evaluation of High-temperature Storage Characteristics**

The rechargeable lithium battery cells according to Examples 1 to 9 and Comparative Examples 1 to 15 were measured with respect to initial DC resistance (DCIR) as △V/△I (change in voltage / change in current), and after changing a maximum energy state inside the battery cells into a full charge state (SOC 100%) and storing the cells in this state at a high temperature (60 °C) for 30 days, the cells was measured with respect to DC resistance to calculate a DCIR increase rate (%) according to Equation 1, and the results are shown in Table 1.

DCIR increase rate = {(DCIR after 30 days - initial DCIR) / initial DCIR} X 100% [Equation 1]

**Evaluation 2: Evaluation of High-temperature Storage Characteristics**

The rechargeable lithium battery cells according to Examples 1 to 9 and Comparative Examples 1 to 15 were measured with respect to CID open time to evaluate high-temperature storage characteristics, and the results are shown in Table 1.

After twice carrying out formation charge/discharge at 0.2 C/0.5 C and then, once carrying out a charge/discharge experiment at standard charge/discharge current density of 0.5 C/0.2 C, a charge cut-off voltage of 4.2 V (Li/graphite), and a discharge cut-off voltage of 3.0 V (Li/graphite), the cells were allowed in a 90 °C chamber for 60 hours and then, measured with respect to the CID (Current Interrupt Device) open time.

The compositions and the evaluation results of the rechargeable lithium battery cells are shown in Table 1.

(Table 1)

| | Ni content (wt%) | Content of additive (wt%) | Initial DCIR (mOh m) | DCIR after high-temperatu re storage (mOhm) | DCIR Increase rate (%) | CID open time (@90 °C, hr) |
|---|---|---|---|---|---|---|
| Comparative Example 1 | 88 | 0 | 30.1 | 33.6 | 11.6 | 51 (100%) |
| Example 1 | 88 | 0.5 | 30.3 | 33.5 | 10.6 | 62 (122%) |
| Example 2 | 88 | 1.0 | 30.8 | 33.1 | 7.5 | 68 (133%) |
| Example 3 | 88 | 3.0 | 31.2 | 33.4 | 7.1 | 75 (147%) |
| Comparative Example 2 | 91 | 0 | 29.2 | 33 | 13.0 | 45 (100%) |
| Example 4 | 91 | 0.5 | 29.4 | 32.5 | 10.5 | 52 (116%) |
| Example 5 | 91 | 1.0 | 30.3 | 32.1 | 5.9 | 55 (122%) |
| Example 6 | 91 | 3.0 | 31.0 | 33.0 | 6.5 | 70 (156%) |
| Comparative Example 3 | 94 | 0 | 28.9 | 32.0 | 10.7 | 31 (100%) |
| Example 7 | 94 | 0.5 | 28.8 | 31.5 | 9.4 | 38 (123%) |
| Example 8 | 94 | 1.0 | 29.2 | 31.6 | 8.2 | 45 (141%) |
| Example 9 | 94 | 3.0 | 29.5 | 30.9 | 4.7 | 51 (165%) |
| Comparative Example 4 | 60 | 0 | 41.0 | 45.0 | 9.8 | 55 (100%) |
| Comparative Example 5 | 60 | 0.5 | 41.2 | 45.5 | 10.4 | 59 (107%) |
| Comparative Example 6 | 60 | 1.0 | 41.8 | 46.1 | 10.3 | 65 (119%) |
| Comparative Example 7 | 60 | 3.0 | 42.0 | 48.0 | 14.3 | 68 (124%) |
| Comparative Example 8 | 50 | 0 | 45.0 | 50.0 | 11.1 | 61 (100%) |
| Comparative Example 9 | 50 | 0.5 | 45.1 | 51.2 | 13.5 | 64 (105%) |
| Comparative Example 10 | 50 | 1.0 | 45.5 | 52.0 | 14.3 | 68 (111%) |
| Comparative Example 11 | 50 | 3.0 | 46.2 | 53.0 | 14.7 | 70 (115%) |
| Comparative Example 12 | 33 | 0 | 49.0 | 54.0 | 10.2 | 64 (100%) |
| Comparative Example 13 | 33 | 0.5 | 49.6 | 54.9 | 10.7 | 68 (106%) |

(continued)

| | Ni content (wt%) | Content of additive (wt%) | Initial DCIR (mOh m) | DCIR after high-temperatu re storage (mOhm) | DCIR Increase rate (%) | CID open time (@90 °C, hr) |
|---|---|---|---|---|---|---|
| Comparative Example 14 | 33 | 1.0 | 51.5 | 57.6 | 11.8 | 75 (117%) |
| Comparative Example 15 | 33 | 3.0 | 53.1 | 59.9 | 12.8 | 76 (119%) |

Referring to Table 1, a composition simultaneously including an electrolyte solution including an additive and a high Ni positive active material exhibited effects of reducing gas generation and simultaneously, increasing internal resistance of a battery.

In particular, the compositions according to Examples 1 to 3, 4 to 6, and 7 to 9 in which the Ni content was respectively 88%, 91%, and 94%, compared with the compositions according to Comparative Examples 5 to 7, 9 to 11, and 13 to 15 in which the Ni content was respectively 60%, 50%, and 30% exhibited much improved gas reduction characteristics relative to the compositions including no additives when comparing the compositions including the additives in the same contents. The reason is that the higher the Ni content was, the more the electrolyte solution was oxidized on the surface of the positive active material in a high charge state, which caused storability deterioration at a high temperature, but the composition according to the present invention was effective for of this severe problem.

**Claims**

**1.** A rechargeable lithium battery (100), comprising

a positive electrode (114) including a positive active material;
a negative electrode (112) including a negative active material; and
an electrolyte solution including a non-aqueous organic solvent, a lithium salt, and an additive,
wherein the additive includes a compound represented by Chemical Formula 1 and succinonitrile (SN), and the positive active material includes at least one of lithium composite oxides represented by Chemical Formula 3:

[Chemical Formula 1]

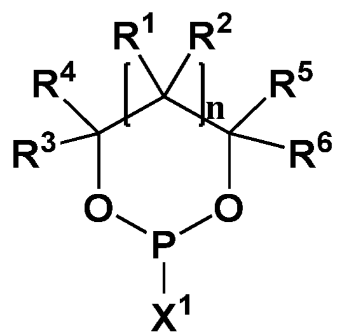

wherein, in Chemical Formula 1,
$X^1$ is a fluoro group, a chloro group, a bromo group, or an iodo group,
$R^1$ to $R^6$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
n is an integer of 0 or 1;

[Chemical Formula 3] $Li_aNi_xCo_yM^1_zM^2_tO_2$

wherein, in Chemical Formula 3,

$0.9 \leq a < 1.2$, $0.88 \leq x < 1.0$, $0 \leq y \leq 0.2$, $0 < z \leq 0.3$, $x + y + z = 1$, $0 \leq t \leq 0.1$,

$M^1$ is Mn, Al, or a combination thereof,
$M^2$ is Ti, Mg, Zr, Ca, Nb, Fe, P, F, B, or a combination thereof,
wherein the term "substituted" refers to replacement of hydrogen of a compound by a substituent selected from a halogen atom (F, Br, Cl, or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, and a combination thereof.

**2.** The rechargeable lithium battery (100) of claim 1, wherein

Chemical Formula 1 includes a compound represented by Chemical Formula 1A or Chemical Formula 1B:

[Chemical Formula 1A] [Chemical Formula 1B]

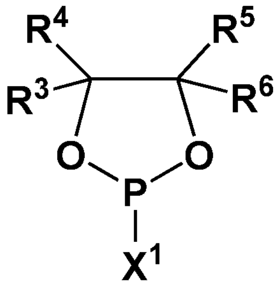
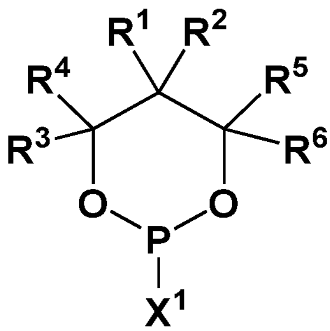

wherein, in Chemical Formula 1A and Chemical Formula 1B,
$X^1$ is a fluoro group, a chloro group, a bromo group, or an iodo group, and
$R^1$ to $R^6$ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

**3.** The rechargeable lithium battery (100) of claim 2, wherein

in Chemical Formula 1A, $R^3$ and $R^4$ are each hydrogen, and
at least one of $R^5$ and $R^6$ is a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

**4.** The rechargeable lithium battery (100) of any one of the preceding claims, wherein
the compound represented by Chemical Formula 1 is included in an amount of 0.1 parts by weight to 5.0 parts by weight based on 100 parts by weight of the non-aqueous organic solvent and the lithium salt of the electrolyte solution.

**5.** The rechargeable lithium battery (100) of claim 4, wherein
the compound represented by Chemical Formula 1 is included in an amount of 0.1 parts by weight to 3.0 parts by weight based on 100 parts by weight of the electrolyte solution.

**6.** The rechargeable lithium battery (100) of any one of the preceding claims, wherein
the compound represented by Chemical Formula 1 is at least one of the compounds of Group 1:

[Group 1]

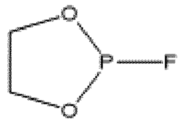 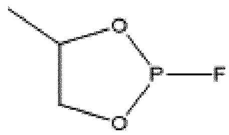 .

**7.** The rechargeable lithium battery (100) of any one of the preceding claims, wherein the electrolyte further includes at least one of other additives selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), 1,3,6-hexane tricyanide (HTCN), propene sultone (PST), propane sultone (PS), lithium tetrafluoroborate ($LiBF_4$), lithium difluorophosphate ($LiPO_2F_2$), and 2-fluoro biphenyl (2-FBP).

**8.** The rechargeable lithium battery (100) of any of the preceding claims, wherein in Chemical Formula 3, x is in the range of $0.88 \leq x \leq 0.94$.

**9.** The rechargeable lithium battery (100) of any one of the preceding claims, wherein the negative active material includes at least one of graphite and a Si composite.

**10.** The rechargeable lithium battery (100) of claim 9, wherein the Si composite includes a core including Si-based particles and an amorphous carbon coating layer.

**11.** The rechargeable lithium battery (100) of claim 10, wherein the core including Si-based particles includes at least one of Si particles, a Si-C composite, $SiO_x$ ($0 < x \leq 2$), and a Si alloy.

**12.** The rechargeable lithium battery (100) of claim 11, wherein

a radius of the center region of the core corresponds to 30% to 50% of a radius of the negative active material, and the average particle diameter of the Si-based particles is 10 nm to 200 nm.

**13.** The rechargeable lithium battery (100) of claim 11, wherein the center region does not include an amorphous carbon, an amorphous carbon exists only in the surface region of the negative electrode active material

**14.** The rechargeable lithium battery (100) of claim 11, wherein the negative electrode active material further includes crystalline carbon.

**Patentansprüche**

**1.** Wiederaufladbare Lithiumbatterie (100), umfassend

eine positive Elektrode (114), die eine positives Aktivmaterial beinhaltet;
eine negative Elektrode (112), die ein negatives Aktivmaterial beinhaltet; und
eine Elektrolytlösung, die ein nicht wässriges organisches Lösungsmittel, ein Lithiumsalz und einen Zusatzstoff beinhaltet,
wobei der Zusatzstoff eine durch die chemische Formel 1 dargestellte Verbindung und Succinonitril (SN) beinhaltet, und
das positive Aktivmaterial mindestens eines der Lithiumverbundoxide beinhaltet, die durch die chemische Formel 3 dargestellt sind:

[Chemische Formel 1]

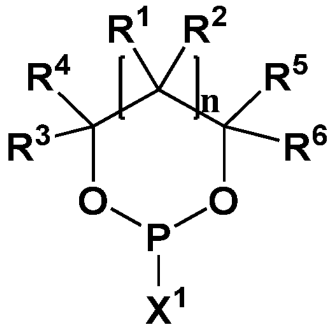

wobei in der chemischen Formel 1
$X^1$ für eine Fluorgruppe, eine Chlorgruppe, eine Bromgruppe oder eine Iodgruppe steht,
$R^1$ bis $R^6$ jeweils unabhängig für Wasserstoff, eine Cyanogruppe, eine substituierte oder unsubstituierte C1- bis C20-Alkylgruppe, eine substituierte oder unsubstituierte C1- bis C20-Alkoxygruppe, eine substituierte oder unsubstituierte C2- bis C20-Alkenylgruppe, eine substituierte oder unsubstituierte C2- bis C20-Alkinylgruppe, eine substituierte oder unsubstituierte C3- bis C20-Cykloalkylgruppe, eine substituierte oder unsubstituierte C6-C20-Arylgruppe oder eine substituierte oder unsubstituierte C2- bis C20-Heteroarylgruppe stehen, und
n für eine ganze Zahl von 0 oder 1 steht;

[Chemische Formel 3] $Li_aNi_xCo_yM^1{}_zM^2{}_tO_2$

wobei in der chemischen Formel 3

$0{,}9 \leq a < 1{,}2,\ 0{,}88 \leq x < 1{,}0,\ 0 \leq y \leq 0{,}2,\ 0 < z \leq 0{,}3,\ x + y + z = 1,\ 0 \leq t \leq 0{,}1,$

$M^1$ für Mn, Al oder eine Kombination davon steht,
$M^2$ für Ti, Mg, Zr, Ca, Nb, Fe, P, F, B, oder eine Kombination davon steht,
wobei sich der Begriff "substituiert" auf den Ersatz von Wasserstoff einer Verbindung durch einen Substituenten bezieht, der ausgewählt aus einem Halogenatom (F, Br, Cl oder I), einer Hydroxygruppe, einer Alkoxygruppe, einer Nitrogruppe, einer Cyanogruppe, einer Aminogruppe, einer Azidogruppe, einer Amidinogruppe, einer Hydrazinogruppe, einer Hydrazonogruppe, einer Carbonylgruppe, einer Carbamylgruppe, einer Thiolgruppe, einer Estergruppe, einer Carboxylgruppe oder einem Salz davon, einer Sulfonsäuregruppe oder einem Salz davon, einer Phosphorsäuregruppe oder einem Salz davon, einer C1-bis C20-Alkylgruppe, einer C2- bis C20-Alkenylgruppe, einer C2- bis C20-Alkinylgruppe, einer C6- bis C30-Arylgruppe, einer C7- bis C30-Arylalkylgruppe, einer C1- bis C4-Alkoxygruppe, einer C1- bis C20-Heteroalkylgruppe, einer C3-bis C20-Heteroarylalkylgruppe, einer C3- bis C30-Cycloalkylgruppe, einer C3- bis C15-Cycloalkenylgruppe, einer C6- bis C15-Cycloalkinylgruppe, einer C2- bis C20-Heterocycloalkylgruppe und einer Kombination davon.

**2.** Wiederaufladbare Lithiumbatterie (100) nach Anspruch 1, wobei

die chemische Formel 1 eine Verbindung beinhaltet, die durch die chemische Formel 1A oder die chemische Formel 1B dargestellt ist:

[Chemische Formel 1A] [Chemische Formel 1B]

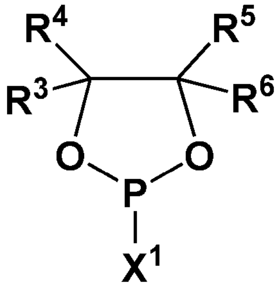
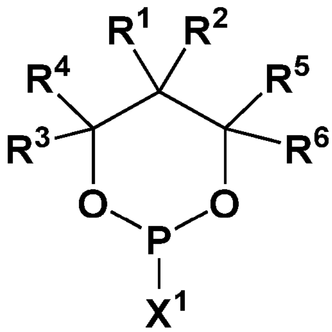

wobei in der chemischen Formel 1A und der chemischen Formel 1B
$X^1$ für eine Fluorgruppe, eine Chlorgruppe, eine Bromgruppe oder eine Iodgruppe steht, und
$R^1$ bis $R^6$ jeweils unabhängig für Wasserstoff, eine substituierte oder unsubstituierte C1- bis C10-Alkylgruppe, eine substituierte oder unsubstituierte C1- bis C10-Alkoxygruppe, eine substituierte oder unsubstituierte C2- bis C10-Alkenylgruppe oder eine substituierte oder unsubstituierte C2- bis C10-Alkinylgruppe stehen.

**3.** Wiederaufladbare Lithiumbatterie (100) nach Anspruch 2, wobei

in der chemischen Formel 1A $R^3$ und $R^4$ jeweils für Wasserstoff stehen, und
mindestens eines von $R^5$ und $R^6$ für eine substituierte oder unsubstituierte C1- bis C10-Alkylgruppe, eine substituierte oder unsubstituierte C1- bis C10-Alkoxygruppe, eine substituierte oder unsubstituierte C2- bis C10-Alkenylgruppe oder eine substituierte oder unsubstituierte C2- bis C10-Alkinylgruppe steht.

**4.** Wiederaufladbare Lithiumbatterie (100) nach einem der vorhergehenden Ansprüche, wobei
die durch die chemische Formel 1 dargestellte Verbindung in einer Menge von 0,1 Gewichtsteilen bis 5,0 Gewichtsteilen basierend auf 100 Gewichtsteilen des nicht wässrigen organischen Lösungsmittels und des Lithiumsalzes der Elektrolytlösung enthalten ist.

**5.** Wiederaufladbare Lithiumbatterie (100) nach Anspruch 4, wobei
die durch die chemische Formel 1 dargestellte Verbindung in einer Menge von 0,1 Gewichtsteilen bis 3,0 Gewichtsteilen basierend auf 100 Gewichtsteilen der Elektrolytlösung enthalten ist.

**6.** Wiederaufladbare Lithiumbatterie (100) nach einem der vorhergehenden Ansprüche, wobei
die durch die chemische Formel 1 dargestellte Verbindung mindestens eine der Verbindungen der Gruppe 1 ist:

[Gruppe 1]

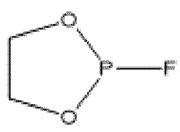
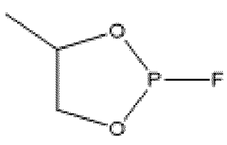
.

**7.** Wiederaufladbare Lithiumbatterie (100) nach einem der vorhergehenden Ansprüche, wobei
der Elektrolyt ferner mindestens einen von anderen Zusatzstoffen beinhaltet, die ausgewählt sind aus Vinylencarbonat (VC), Fluorethylencarbonat (FEC), Difluorethylencarbonat, Chlorethylencarbonat, Dichlorethylencarbonat, Bromethylencarbonat, Dibromethylencarbonat, Nitroethylencarbonat, Cyanoethylencarbonat, Vinylethylencarbonat (VEC), Adiponitril (AN), 1,3,6-Hexantricyanid (HTCN), Propensulton (PST), Propansulton (PS), Lithiumtetrafluorborat ($LiBF_4$), Lithiumdifluorphosphat ($LiPO_2F_2$) und 2-Fluorobiphenyl (2-FBP).

**8.** Wiederaufladbare Lithiumbatterie (100) nach einem der vorhergehenden Ansprüche, wobei
in der chemischen Formel 3 x im Bereich von $0{,}88 \leq x \leq 0{,}94$ liegt.

**9.** Wiederaufladbare Lithiumbatterie (100) nach einem der vorhergehenden Ansprüche, wobei das negative Aktivmaterial mindestens eines von Graphit und einem Si-Verbund beinhaltet.

**10.** Wiederaufladbare Lithiumbatterie (100) nach Anspruch 9, wobei der Si-Verbund einen Kern, der Si-basierte Partikel beinhaltet, und eine Beschichtungsschicht aus amorphem Kohlenstoff beinhaltet.

**11.** Wiederaufladbare Lithiumbatterie (100) nach Anspruch 10, wobei der Kern, der Si-basierte Partikel beinhaltet, mindestens eines von Si-Partikeln, einem Si-C-Verbund, $SiO_x$ ($0 < x \leq 2$) und einer Si-Legierung beinhaltet.

**12.** Wiederaufladbare Lithiumbatterie (100) nach Anspruch 11, wobei

ein Radius des zentralen Bereichs des Kerns 30 % bis 50 % eines Radius des negativen Aktivmaterials entspricht, und
der durchschnittliche Partikeldurchmesser der Si-basierten Partikel 10 nm bis 200 nm beträgt.

**13.** Wiederaufladbare Lithiumbatterie (100) nach Anspruch 11, wobei der zentrale Bereich keinen amorphen Kohlenstoff beinhaltet und ein amorpher Kohlenstoff nur im Oberflächenbereich des Aktivmaterials für die negative Elektrode existiert.

**14.** Wiederaufladbare Lithiumbatterie (100) nach Anspruch 11, wobei das Aktivmaterial für die negative Elektrode ferner kristallinen Kohlenstoff beinhaltet.

## Revendications

**1.** Batterie rechargeable au lithium (100) comportant :

une électrode positive (114) incluant un matériau actif positif ;
une électrode négative (112) incluant un matériau actif négatif ; et
une solution électrolytique incluant un solvant organique non aqueux, un sel de lithium et un additif,
dans lequel l'additif inclut un composé représenté par la Formule chimique 1 et le succinonitrile (SN), et
le matériau actif positif inclut au moins l'un des oxydes composites de lithium représentés par la Formule chimique 3 :

[Formule chimique 1]

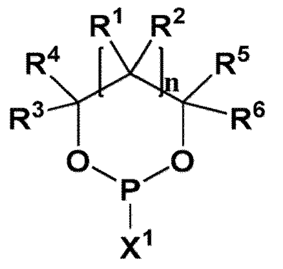

dans laquelle, dans la Formule chimique 1,
$X^1$ est un groupe fluoro, un groupe chloro, un groupe bromo, ou un groupe iodo,
$R^1$ à $R^6$ sont chacun indépendamment hydrogène, un groupe cyano, un groupe alkyle en C1 à C20 substitué ou non substitué, un groupe alcoxy en C1 à C20 substitué ou non substitué, un groupe alcényle en C2 à C20 substitué ou non substitué, un groupe alcynyle en C2 à C20 substitué ou non substitué, un groupe cycloalkyle en C3 à C20 substitué ou non substitué, un groupe aryle en C6 à C20 substitué ou non substitué ou un groupe hétéroaryle en C2 à C20 substitué ou non substitué, et
n est un nombre entier de 0 ou 1 ;

[Formule chimique 3] $Li_aNi_xCo_yM^1_zM^2_tO_2$

dans laquelle, dans la Formule chimique 3,

$$0{,}9 \leq a < 1{,}2,\ 0{,}88 \leq x < 1{,}0,\ 0 \leq y \leq 0{,}2,\ 0 < z \leq 0{,}3,\ x + y + z = 1,\ 0 \leq t \leq 0{,}1,$$

$M^1$ est Mn, Al, ou une combinaison de ceux-ci,
$M^2$ est Ti, Mg, Zr, Ca, Nb, Fe, P, F, B, ou une combinaison de ceux-ci,
dans laquelle le terme « substitué » fait référence au remplacement de l'hydrogène d'un composé par un substituant sélectionné parmi un atome d'halogène (F, Br, Cl ou I), un groupe hydroxy, un groupe alcoxy, un groupe nitro, un groupe cyano, un groupe amino, un groupe azido, un groupe amidino, un groupe hydrazino, un groupe hydrazono, un groupe carbonyle, un groupe carbamyle, un groupe thiol, un groupe ester, un groupe carboxyle ou un sel de celui-ci, un groupe acide sulfonique ou un sel de celui-ci, un groupe acide phosphorique ou un sel de celui-ci, un groupe alkyle en C1 à C20, un groupe alcényle en C2 à C20, un groupe alcynyle en C2 à C20, un groupe aryle en C6 à C30, un groupe arylalkyle en C7 à C30, un groupe alcoxy en C1 à C4, un groupe hétéroalkyle en C1 à C20, un groupe hétéroarylalkyle en C3 à C20, un groupe cycloalkyle en C3 à C30, un groupe cycloalkényle en C3 à C15, un groupe cycloalkynyle en C6 à C15, un groupe hétérocycloalkyle en C2 à C20 et une combinaison de ceux-ci.

**2.** Batterie au lithium rechargeable (100) selon la revendication 1, dans laquelle

la Formule chimique 1 inclut un composé représenté par la Formule chimique 1A ou la Formule chimique 1B :

[Formule chimique 1A] [Formule chimique 1B]

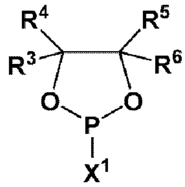
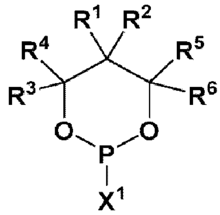

dans laquelle, dans la Formule chimique 1A et la Formule chimique 1B,
$X^1$ est un groupe fluoro, un groupe chloro, un groupe bromo, ou un groupe iodo, et
$R^1$ à $R^6$ sont chacun indépendamment hydrogène, groupe alkyle en C1 à C10 substitué ou non substitué, groupe alcoxy en C1 à C10 substitué ou non substitué, groupe alcényle en C2 à C10 substitué ou non substitué, ou groupe alcynyle en C2 à C10 substitué ou non substitué.

**3.** Batterie au lithium rechargeable (100) selon la revendication 2, dans laquelle

dans la Formule chimique 1A, $R^3$ et $R^4$ sont chacun de l'hydrogène, et
au moins un parmi $R^5$ et $R^6$ est un groupe alkyle en C1 à C10 substitué ou non substitué, un groupe alcoxy en C1 à C10 substitué ou non substitué, un groupe alcényle en C2 à C10 substitué ou non substitué, ou un groupe alcynyle en C2 à C10 substitué ou non substitué.

**4.** Batterie rechargeable au lithium (100) selon l'une quelconque des revendications précédentes, dans laquelle le composé représenté par la Formule chimique 1 est inclus en une quantité de 0,1 partie en poids à 5,0 parties en poids sur la base de 100 parties en poids du solvant organique non aqueux et du sel de lithium de la solution électrolytique.

**5.** Batterie au lithium rechargeable (100) selon la revendication 4, dans laquelle le composé représenté par la Formule chimique 1 est inclus dans une quantité de 0,1 partie en poids à 3,0 parties en poids sur la base de 100 parties en poids de la solution électrolytique.

**6.** Batterie rechargeable au lithium (100) selon l'une quelconque des revendications précédentes, dans laquelle le composé représenté par la Formule chimique 1 est au moins l'un des composés du groupe 1 :

[Groupe 1]

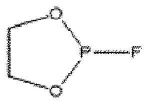 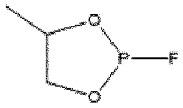

**7.** Batterie rechargeable au lithium (100) selon l'une quelconque des revendications précédentes, dans laquelle l'électrolyte inclut en outre au moins l'un des autres additifs choisis parmi carbonate de vinylène (VC), carbonate de fluoroéthylène (FEC), carbonate de difluoroéthylène, carbonate de chloroéthylène, carbonate de dichloroéthylène, carbonate de bromoéthylène, carbonate de dibromoéthylène, carbonate de nitroéthylène, carbonate de cyanoéthylène, carbonate de vinyléthylène (VEC), adiponitrile (AN), tricyanure de 1,3,6-hexane (HTCN), propène sultone (PST), propane sultone (PS), tétrafluoroborate de lithium ($LiBF_4$), difluorophosphate de lithium ($LiPO_2F_2$) et 2-fluorobiphényle (2-FBP).

**8.** Batterie rechargeable au lithium (100) selon l'une quelconque des revendications précédentes, dans laquelle dans la Formule chimique 3, x est dans la plage de $0,88 \leq x \leq 0,94$.

**9.** Batterie rechargeable au lithium (100) selon l'une quelconque des revendications précédentes, dans laquelle le matériau actif négatif inclut au moins l'un parmi le graphite et un composite Si.

**10.** Batterie au lithium rechargeable (100) selon la revendication 9, dans laquelle le composite Si inclut un noyau incluant des particules à base de Si et une couche de revêtement de carbone amorphe.

**11.** Batterie au lithium rechargeable (100) selon la revendication 10, dans laquelle le noyau comportant des particules à base de Si inclut au moins l'une des particules de Si, un composite Si-C, $SiO_x$ ($0 < x \leq 2$), et un alliage de Si.

**12.** Batterie au lithium rechargeable (100) selon la revendication 11, dans laquelle

un rayon de la région centrale du noyau correspond à 30 % à 50 % d'un rayon du matériau actif négatif, et
le diamètre particulaire moyen des particules à base de Si est de 10 nm à 200 nm.

**13.** Batterie au lithium rechargeable (100) selon la revendication 11, dans laquelle la région centrale n'inclut pas de carbone amorphe, un carbone amorphe n'existe que dans la région de surface du matériau actif d'électrode négatif.

**14.** Batterie au lithium rechargeable (100) selon la revendication 11, dans laquelle le matériau actif d'électrode négatif inclut en outre du carbone cristallin.

【FIG. 1】

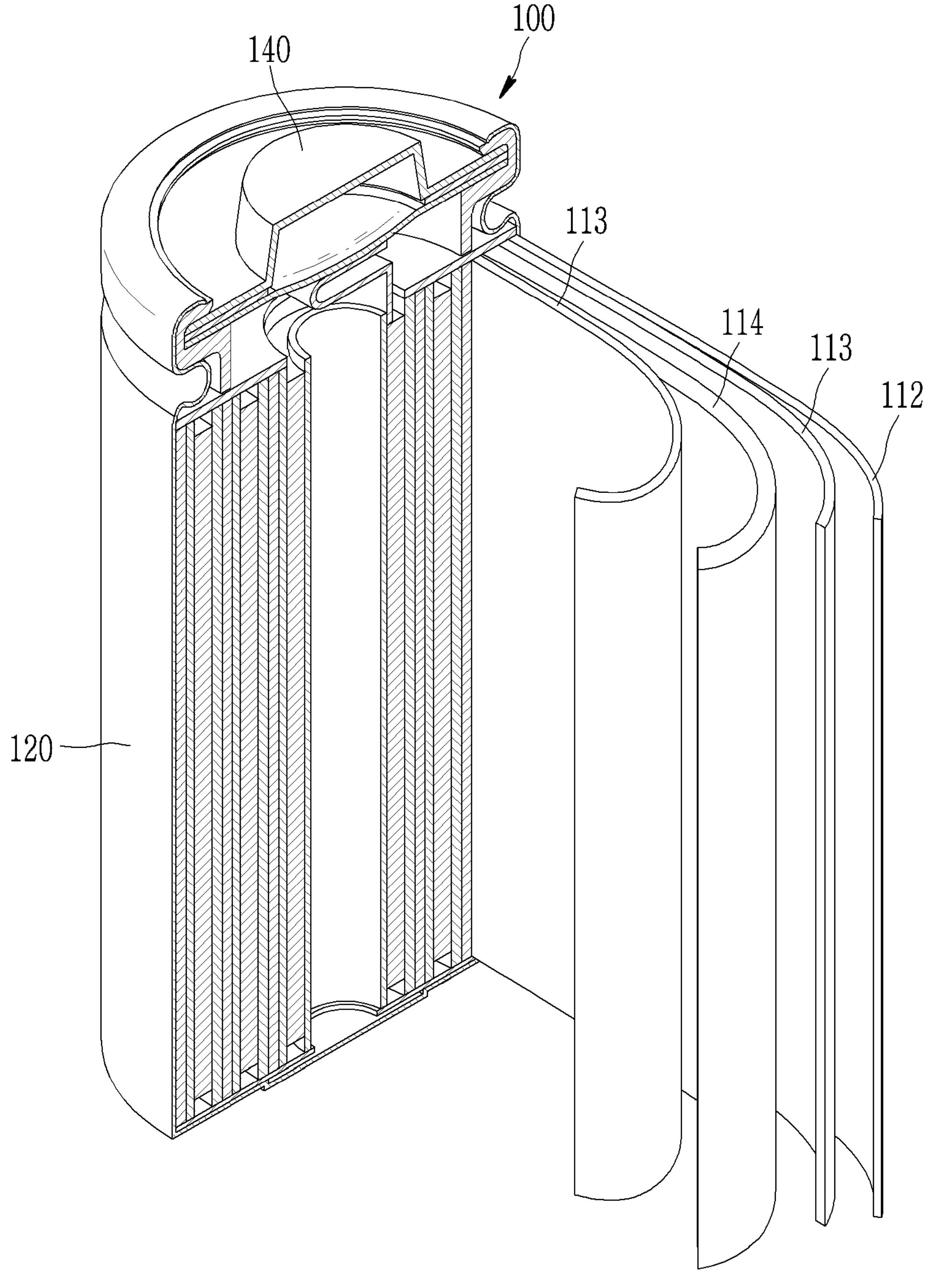

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 4009410 A1
- US 2020185773 A1
- KR 20190123136 A
- CN 108428942 A
- CN 108365265 A
- EP 2746288 A1